(19) Europäisches Patentamt
European Patent Office
Office européen des brevets

(11) **EP 1 386 171 B1**

## (12) EUROPÄISCHE PATENTSCHRIFT

(45) Veröffentlichungstag und Bekanntmachung des Hinweises auf die Patenterteilung:
**30.09.2009 Patentblatt 2009/40**

(51) Int Cl.:
**G01P 15/00** *(2006.01)* **G01P 15/125** *(2006.01)*
**G01P 15/18** *(2006.01)*

(21) Anmeldenummer: **02732384.9**

(22) Anmeldetag: **09.04.2002**

(86) Internationale Anmeldenummer:
**PCT/DE2002/001292**

(87) Internationale Veröffentlichungsnummer:
**WO 2002/088758 (07.11.2002 Gazette 2002/45)**

(54) **VORRICHTUNG ZUR BESCHLEUNIGUNGSMESSUNG**

DEVICE FOR MEASURING ACCELERATION

DISPOSITIF POUR LA MESURE D'ACCELERATION

(84) Benannte Vertragsstaaten:
**DE FR GB SE**

(30) Priorität: **02.05.2001 DE 10121391**

(43) Veröffentlichungstag der Anmeldung:
**04.02.2004 Patentblatt 2004/06**

(73) Patentinhaber: **ROBERT BOSCH GMBH**
**70442 Stuttgart (DE)**

(72) Erfinder: **SCHAUMANN, Arno**
**71638 Ludwigsburg (DE)**

(56) Entgegenhaltungen:
**WO-A-98/58264**

- **AHMAD H ET AL: "A TWO-DIMENSIONAL MICROMACHINED ACCELEROMETER" IEEE TRANSACTIONS ON INSTRUMENTATION AND MEASUREMENT, IEEE INC. NEW YORK, US, Bd. 46, Nr. 1, 1. Februar 1997 (1997-02-01), Seiten 18-26, XP000691956 ISSN: 0018-9456**
- **GEITNER H: "BESCHLEUNIGUNGS-MESSUNG IN ZWEI DIMENSIONEN" F & M FEINWERKTECHNIK MIKROTECHNIK MIKROELEKTRONIK, CARL HANSER GMBH & CO, DE, Bd. 106, Nr. 7/8, Juli 1998 (1998-07), Seiten 538-541, XP000847005 ISSN: 0944-1018**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Stand der Technik

Die Erfindung geht aus von einer Vorrichtung zur Beschleunigungsmessung nach der Gattung des unabhängigen Patentanspruchs.

Es ist bereits aus der Offenlegungsschrift WO 98/58264 bekannt, ein zweidimensionales Sensorelement einzusetzen, das zur Beschleunigungsmessung dient, wobei die Auswertung der Meßsignale für die zwei unterschiedlichen Meßrichtungen durch getrennte Demodulatoren erfolgt. Es liegt daher ausgehend von dem Stand der Technik der Erfindung die Aufgabe zugrunde, eine vereinfachte Auswertung der Meßsignale eines zweidimensionalen Sensorelements zu schaffen.

Vorteile der Erfindung

Die erfindungsgemäße Vorrichtung zur Beschleunigungsmessung mit den Merkmalen des unabhängigen Patentanspruchs hat demgegenüber den Vorteil, daß eine Kombination der Meßsignale aus den unterschiedlichen Meßrichtungen in einer Schaltung gemeinsam und gleichzeitig ausgewertet wird. Damit wird der Aufwand erheblich reduziert. Insbesondere beim Einsatz in der Kraftfahrzeugtechnik und dabei bei einer Crash-Sensierung ist damit eine einfache Möglichkeit der Crash-Plausibilität bei Front- oder Seitenaufprallsensoren möglich. Bei der Front- und/oder Seitenaufpralldetektion ist meist nicht nur ein oder mehrere Sensor/en zur eigentlichen Aufpralldetektion vorhanden, sondern auch ein weiterer unabhängiger Sensor zur Plausibilisierung eines Aufpralldetektionssignals. Damit wird also überwacht, daß die eigentlichen Aufprallsensoren richtig funktionieren.

Für beide Meßrichtungen sind jeweils Taktgeneratoren an dem zweidimensionalen Sensorelement vorgesehen und das Verhältnis der Frequenz, die die beiden Taktgeneratoren jeweils liefern, ist geradzahlig. Dadurch werden in einem geraden Taktzyklus die Signale in Phase und die ungeraden in Antiphase erhalten.

Durch die in den abhängigen Ansprüchen aufgeführten Maßnahmen und Weiterbildungen sind vorteilhafte Verbesserungen der im unabhängigen Patentanspruch angegebenen Vorrichtung zur Beschleunigungsmessung möglich.

Weiterhin ist es von Vorteil, daß die Auswerteschaltung der erfindungsgemäßen Vorrichtung einen Schwellwertentscheider aufweist, so daß die Kombination der Meßsignale aus den unterschiedlichen Meßrichtungen mit einem aus Experimenten und Simulationen ermittelten Schwellwert verglichen wird, um zu entscheiden, ob es sich, wenn ein Auslöseereignis, das durch die Aufprallsensoren erkannt wurde, plausibilisiert werden soll, um einen Aufprall handelt oder nicht.

Durch die Kombination mit einem weiteren Beschleunigungssensor ist eine weitere Optimierung möglich.

Zeichnung

Ausführungsbeispiele der Erfindung sind in der Zeichnung dargestellt und werden in der nachfolgenden Beschreibung näher erläutert. Es zeigen:

Figur 1 ein Funktionsprinzip einer zweidimensionalen Sensormembran,
Figur 2 ein Blockschaltbild der erfindungsgemäßen Vorrichtung,
Figur 3 ein zweites Blockschaltbild der erfindungsgemäßen Vorrichtung und
Figur 4 die Zeitverhältnisse der unterschiedlichen Meßspannungen für ein geradzahliges Frequenzverhältnis, hier gleich zwei gewählt.

Beschreibung

Zunehmend werden in der Kraftfahrzeugindustrie Beschleunigungssensoren eingesetzt. Solche Beschleunigungssensoren werden immer häufiger durch Mikromechanik aus Halbleitern angefertigt. Dabei wird eine Membran als beschleunigungssensitives Sensorelement verwendet. Um Beschleunigung in einer Fläche zu detektieren, ist es mit einer solchen Membran möglich, diese Beschleunigung in X- und Y-Richtung aufzunehmen.

Erfindungsgemäß werden nun solche Meßsignale aus zueinander senkrecht stehenden Meßrichtungen kombiniert und gemeinsam und gleichzeitig in einer Auswerteschaltung ausgewertet.

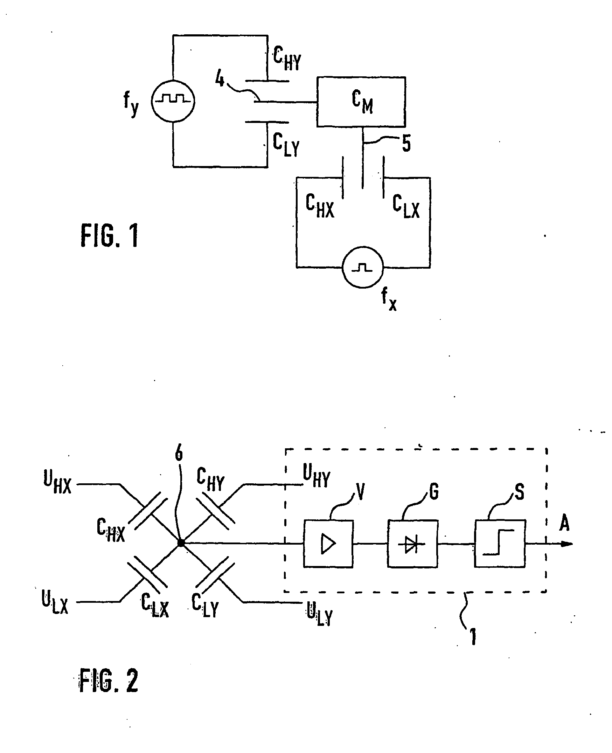

Figur 1 zeigt die Funktionsweise einer zweidimensionalen Membran. Eine Membran CM weist jeweils zwei Finger 4 und 5 auf, die in einer Interdigital-Struktur mit einer äußeren Beschaltung jeweils zwei Kondensatoren bildet. Der Interdigital-Finger 4 bildet einen ersten Kondensator CHY mit der oberen Elektrode und einen zweiten Kondensator CLY mit der unteren Elektrode. Auf die Elektroden wird ein Taktsignal mit der Frequenz FY gegeben.

Der Interdigital-Finger 5 bildet einen ersten Kondensator CHX mit der linken Elektrode und einen zweiten Kondensator CLX mit einer rechten Elektrode. Auch hier wird auf die Reihenschaltung der Kondensatoren CHX und CLX ein Taktsignal mit einer Frequenz FX gegeben. Durch die Interdigital-Finger 4 und 5 liegt also jeweils eine Reihenschaltung aus zwei Kondensatoren vor. In einer Ruhestellung befinden sich die Interdigital-Finger 4 und 5 bei Ruhewerten in der Mitte zwischen den jeweiligen Elektroden. Diese Mitte ist durch die Ruhewerte Y0 und X0 gekennzeichnet, wobei Y0 der Ruhewert für den Interdigital-Finger 4 und X0 der Ruhewert für den Interdigital-Finger 5 ist.

Je nach welcher Richtung die Interdigital-Finger 4 und 5 ausgelenkt werden, verändern sich die Kapazitäten der Kondensatoren CHY, CLY, CHX und CLX. Da der Abstand zwischen zwei Elektroden umgekehrt proportional zur Kapazität zwischen den Elektroden ist, wird sich die Kapazität CHY beim Bewegen des Interdigital-Fingers 4 in Richtung auf die obere Elektrode vergrößern, während sich die Kapazität des Kondensators CLY verringert, da sich der Abstand zur unteren Elektrode im gleichen Maße erhöht. Diese Überlegung gilt ebenso für den Interdigital-Finger 5 und die Kondensatoren CHX und CLX.

Figur 2 zeigt nun als Blockschaltbild die erfindungsgemäße Vorrichtung zur Beschleunigungsmessung. Es liegt dabei ein Ersatzschaltbild vor, das die in Figur 1 gezeigten Kondensatoren CHX, CLX, CHY und CLY in eine Schaltung überführt, die eine gemeinsame Verbindung 6 aufweisen, von der eine Kombination und zwar eine Addition der Meßsignale, das sind hier die abgegriffenen Spannungen UHX, ULX, UHY und ULY von einer Auswerteschaltung 1 gemeinsam und gleichzeitig ausgewertet werden. Zunächst werden die kombinierten Meßsignale von einem Verstärker V verstärkt, wobei hier ein Ladungsverstärker mit Grundwertfilter verwendet wird. Es können jedoch auch andere Verstärkerschaltungen und Verstärkertypen hier verwendet werden. Danach folgt ein Gleichrichternetzwerk G, das das kombinierte Signal betragsmäßig abbildet.

Da wie weiter unten gezeigt wird, je nach Taktzyklus einmal eine Addition der Meßspannungen und zum anderen eine Subtraktion der Meßspannungen vorliegt, liegt einerseits ein Betrage $U_M$ von X+Y und andererseits ein Betrag $U_M$ von X-Y vor. Das so gleich gerichtete kombinierte Signal wird dann in einem Schwellwertentschalter S mit einem vorgegebenen Schwellwert verglichen, um festzustellen, ob dieser überschritten wurde oder nicht. Im der Seiten- bzw. Frontpralldetektion wird damit erkannt, ob ein Frontaufprall oder ein Seitenaufprall vorliegt. Damit wird dann ein genauerer Sensor plausibilisiert. Dieses Auswertesignal, das also bedeutet, ob ein Aufprall vorliegt oder nicht, liegt dann als Ausgangssignal A vor. Es ist möglich, dass mehr als ein Sensorsignal auf diese Weise plausibilisiert wird.

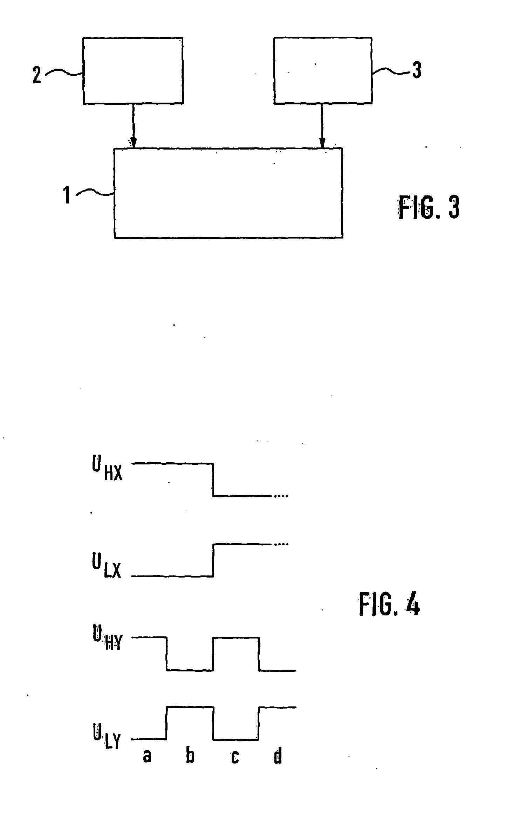

In Figur 3 ist ein zweites Blockschaltbild dargestellt, das die erfindungsgemäße Vorrichtung zur Beschleunigungsmessung darstellt. Die Auswerteschaltung 1 erhält hier neben dem kombinierten Meßsignal von dem zweidimensionalen Sensor 2 auch ein weiteres Beschleunigungssignal, hier von einem Beschleunigungssensor in Fahrtrichtung.

In Figur 4 ist dargestellt, wie die Zeitverhältnisse der unterschiedlichen Spannungen die über den Kondensatoren gemessen werden sind. Die Spannungen über den Kondensatoren CHX und CLX, das sind hier UHX und ULX, sind aufgrund der Taktfrequenz FX mit der halben Frequenz getaktet mit der die Spannungen UHY und ULY getaktet werden. Daher lassen sich hier vier Bereiche a, b, c und d unterscheiden. Für die Bereiche a und d gilt

$$U_M \sim f\left(\frac{C_{HX} \cdot C_{HY}}{C_{LX} \cdot C_{LY}}\right) \sim f\left(\frac{x_0 - x}{x_0 + x} \cdot \frac{y_0 - y}{y_0 + y}\right) \approx f(x+y) \, ,$$

während für die Bereiche b und c gilt

$$U_M \sim f\left(\frac{C_{HX} \cdot C_{LY}}{C_{LX} \cdot C_{HY}}\right) \sim f\left(\frac{x_0 - x}{x_0 + x} \cdot \frac{y_0 + y}{y_0 - y}\right) \approx f(x-y)$$

f bezeichnet hier einen funktionellen Zusammenhang. Dies erklärt, warum unterschiedliche Frequenzen für die beiden Taktgeneratoren verwendet werden.

**Patentansprüche**

1. Vorrichtung zur Beschleunigungsmessung, wobei die Vorrichtung eine zweidimensionale Sensormembran (CM) aufweist, wobei eine Auswerteschaltung (1) zur Verarbeitung von Signalen von der zweidimensionalen Sensormembran (CM) vorhanden ist, wobei die Auswerteschaltung (1) so ausgebildet ist, dass sie eine Verknüpfung aus den Signalen von Beschleunigungen in einer ersten und einer zweiten Richtung auswertet, wobei die erste und die zweite Richtung einen rechten Winkel bilden, **dadurch gekennzeichnet, dass** jeweils für die erste und zweite Richtung ein Taktgenerator vorhanden ist, wobei zwischen den jeweiligen Taktfrequenzen ein geradzahliger Faktor, vorzugsweise zwei, besteht, wobei die Sensormembran (CM) zwei Finger (4, 5) aufweist, wobei die zwei Finger (4, 5) in einer Interdigitalstruktur mit einer äußeren Beschaltung jeweils zwei Kondensatoren ($C_{HY}$, $C_{LY}$, $C_{HX}$, $C_{LX}$) bilden, wobei die Kondensatoren ($C_{HY}$, $C_{LY}$, $C_{HX}$, $C_{LX}$) eine gemeinsame Verbindung (6) aufweisen, an der je nach Taktzyklus einmal eine Addition und zum anderen eine Subtraktion von Messspannungen vorliegt.

**2.** Vorrichtung nach Anspruch 1, **dadurch gekennzeichnet, dass** ein Schwellwertschalter (S) in der Auswerteschaltung (1) zum Vergleich der Verknüpfung mit einem Schwellwert vorhanden ist.

**3.** Vorrichtung nach Anspruch 1 oder 2, **dadurch gekennzeichnet, dass** die Vorrichtung einen weiteren Beschleunigungssensor (3) aufweist.

**4.** Vorrichtung nach einem der vorhergehenden Ansprüche, **dadurch gekennzeichnet, dass** ein Ausgangssignal des Schwellwertschalters (S) zur Plausibilisierung für eine Aufpralldetektion verwendet wird.

**Claims**

**1.** Device for measuring acceleration, the device having a two-dimensional sensor diaphragm (CM), an evaluation circuit (1) being provided for the purpose of processing signals from the two-dimensional sensor diaphragm (CM), the evaluation circuit (1) being designed in such a manner that it evaluates a combination of the signals from accelerations in a first direction and a second direction, the first and second directions forming a right angle, **characterized in that** a clock generator is respectively provided for the first and second directions, an even factor, preferably two, existing between the respective clock frequencies, the sensor diaphragm (CM) having two fingers (4, 5), the two fingers (4, 5) respectively forming two capacitors ($C_{HY}$, $C_{LY}$, $C_{HX}$, $C_{LX}$) in an interdigital structure with an external connection, the capacitors ($C_{HY}$, $C_{LY}$, $C_{HX}$, $C_{LX}$) having a common connection (6) at which measurement voltages are added, on the one hand, and subtracted, on the other hand, depending on the clock cycle.

**2.** Device according to Claim 1, **characterized in that** a threshold value decision element (S) is provided in the evaluation circuit (1) for the purpose of comparing the combination with a threshold value.

**3.** Device according to Claim 1 or 2, **characterized in that** the device has a further acceleration sensor (3).

**4.** Device according to one of the preceding claims, **characterized in that** an output signal from the threshold value decision element (S) is used to verify impact detection.

**Revendications**

**1.** Dispositif de mesure d'accélération, le dispositif présentant une membrane bidimensionnelle de détecteur (CM), un circuit d'évaluation (1) qui traite des signaux de la membrane bidimensionnelle de détecteur (CM) étant prévu, le circuit d'évaluation (1) étant configuré de manière à évaluer une relation entre les signaux d'accélération dans une première et dans une deuxième direction, la première et la deuxième direction formant un angle droit,
**caractérisé en ce que**
un générateur d'horloge respectif est prévu pour la première et pour la deuxième direction, un facteur entier, de préférence de 2, existant entre les fréquences d'horloge respectives, la membrane de détecteur (CM) présentant deux doigts (4, 5), chacun des deux doigts (4, 5) formant dans une structure interdigitale avec un circuit extérieur deux condensateurs ($C_{HY}$, $C_{LY}$, $C_{HX}$, $C_{LX}$), les condensateurs ($C_{HY}$, $C_{LY}$, $C_{HX}$, $C_{LX}$) présentant une borne commune (6) sur laquelle une addition des tensions de mesure et d'autre part une soustraction des tensions de mesure sont appliquées en fonction du cycle d'horloge.

**2.** Dispositif selon la revendication 1, **caractérisé en ce qu'**un discriminateur (S) à seuil est prévu dans le circuit d'évaluation (1) pour comparer la relation à une valeur de seuil.

**3.** Dispositif selon les revendications 1 ou 2, **caractérisé en ce que** le dispositif présente un autre détecteur d'accélération (3).

**4.** Dispositif selon l'une des revendications précédentes, **caractérisé en ce qu'**un signal de sortie du discriminateur (S) à seuil est utilisé pour l'étude de la plausibilité de la détection d'une collision.

FIG. 1

FIG. 2

2 ⌇ ▢          ▢ ⌇ 3

1 ⌇ ▭

**FIG. 3**

$U_{HX}$ ⎯⎯⎯⎤__....

$U_{LX}$ ⎯⎯⎯⎣‾‾....

**FIG. 4**

$U_{HY}$ ⎯⎤_⎡‾⎤_

$U_{LY}$ _⎡‾⎤_⎡‾⎤
   a   b   c   d

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 9858264 A